# EUROPEAN PATENT APPLICATION

(11) **EP 2 330 799 A1**
(43) Date of publication of application: **08.06.2011**
(21) Application number: 10193295.2
(22) Date of filing: 01.12.2010
(51) Int. Cl.: H04L 29/08

(54) **Network system, content providing method, server, communication terminal, and content obtaining method**

(30) Priority: 04.12.2009 JP 2009276352
(71) Applicant: Sharp Kabushiki Kaisha, Osaka-shi, Osaka 545-8522 (JP)
(72) Inventor: Chiba, Masahiro, Osaka-shi Osaka 545-8522 (JP); Maruyama, Kazuhito, Osaka-shi Osaka 545-8522 (JP); Yajima, Shunsuke, Osaka-shi Osaka 545-8522 (JP)
(74) Representative: Treeby, Philip David William

(57) **Abstract**

A content providing method includes the steps of: a communication terminal (100) transmitting a first request to a server (300); in response to the first request (D1), the server transmitting, to the communication terminal, a first content (D20) and information (D22) for specifying a second content (D40); the communication terminal displaying the first content on a first display; the communication terminal transmitting a second request (D3) to the server based on the information; in response to the second request, the server transmitting the second content to the communication terminal; and the communication terminal displaying the second content on a second display.

## Description

This nonprovisional application is based on Japanese Patent Application No. 2009-276352 filed on December 4, 2009, with the Japan Patent Office, the entire contents of which are hereby incorporated by reference.

### BACKGROUND OF THE INVENTION

### Field of the Invention

The present invention relates to a network system, a content providing method, a server, a communication terminal, and a content obtaining method, by which the server provides a content such as a text and/or an image to a communication terminal. In particular, the present invention relates to a network system, a content providing method, a server, a communication terminal, and a content obtaining method, by which the communication terminal is capable of displaying a plurality of contents on a plurality of displays.

### Description of the Background Art

A communication terminal for receiving a content such as a text and/or an image and displaying the content has been known. Also, a computer has been known which has a main display and a touch panel having a tablet function. Such a computer presents a first content to a user via the main display, and receives a user's instruction via the touch panel having the tablet function.

For example, Japanese Patent Laying-Open No. 2000-339097 discloses an art for switching modes in accordance with an operation onto a mode switching button provided in an information processing device. Further, Japanese Patent Laying-Open No. 2004-5212 discloses an art for switching from one mode to the other mode upon reception of an instruction of switching to the other mode. Furthermore, Japanese Patent Laying-Open No. 2007-156983 discloses an art for switching to a touch operation mode when it is detected that an external pointing device has been connected.

A conventional communication terminal is capable of simultaneously displaying a plurality of contents on a plurality of displays (touch panels) respectively. However, in the conventional network system, it is difficult to respectively display a plurality of contents on a plurality of displays of the communication terminal as intended by a content provider.

### SUMMARY OF THE INVENTION

The present invention is made to solve such a problem, and its object is to provide a network system, a content providing method, a server, a communication terminal, and a content obtaining method, by which a plurality of contents can be respectively displayed on a plurality of displays of the communication terminal as desired by a content provider.

According to an aspect of the present invention, a network system including a server and a communication terminal is provided. The server includes: a memory for storing first and second contents therein; a server communication interface for transmitting and receiving data to and from the communication terminal; and a server processor for controlling the server. In response to a first request from the communication terminal, the server processor transmits the first content and information for specifying the second content, to the communication terminal via the server communication interface. In response to a second request from the communication terminal, the server processor transmits the second content to the communication terminal via the server communication interface. The communication terminal includes a first display, a second display, a terminal communication interface for transmitting and receiving the data to and from the server, and a terminal processor for controlling the communication terminal. By transmitting the first request to the server via the terminal communication interface, the terminal processor receives the first content and the information for specifying the second content. The terminal processor displays the first content on the first display. By transmitting the second request to the server via the terminal communication interface based on the information, the terminal processor receives the second content. The terminal processor displays the second content on the second display.

Preferably, the terminal processor includes: a first module for receiving the first content by transmitting the first request to the server via the terminal communication interface, and displaying the first content on the first display; and a second module for receiving the second content by transmitting the second request to the server via the terminal communication interface based on the information, and displaying the second content on the second display.

Preferably, the first content includes first identification information. The second content includes second identification information. The terminal processor determines whether or not each of the contents from the server includes the second identification information, so as to display the content including the second identification information, as the second content on the second display.

Preferably, the memory stores a plurality of the second contents therein, and stores therein operation information indicating correlations between operations and processes in association with the plurality of second contents, the server processor transmits a second content of the plurality of second contents and operation information corresponding to the second content, to the communication terminal, the second display is a touch panel, and the terminal processor accepts an operation via the touch panel, and performs a process corresponding to the operation with reference to the operation information.

Preferably, the first display displays a pointer. The touch panel displays a button. The communication terminal has a mouse mode for accepting an instruction for moving the pointer using the touch panel, and a touch mode for accepting an instruction for pushing the button on the touch panel. The operation information includes a correlation between a predetermined operation onto the touch panel and a process of switching between the modes.

According to another aspect of the present invention, there is provided a content providing method in a network system including a server for storing first and second contents therein and a communication terminal including first and second displays. The content providing method includes the steps of: the communication terminal transmitting a first request to the server; in response to the first request, the server transmitting the first content and information for specifying the second content, to the communication terminal; the communication terminal displaying the first content on the first display; the communication terminal transmitting a second request to the server based on the information; in response to the second request, the server transmitting the second content to the communication terminal; and the communication terminal displaying the second content on the second display.

According to another aspect of the present invention, a server for providing a content to a communication terminal is provided. The server includes: a memory for storing first and second contents therein; a communication interface for transmitting and receiving data to and from the communication terminal; and a processor for controlling the server. In response to a first request from the communication terminal, the processor transmits the first content and information for specifying the second content to the communication terminal via the communication interface. In response to a second request from the communication terminal, the processor transmits the second content to the communication terminal via the communication interface.

According to still another aspect of the present invention, there is provided a content providing method in a server including a memory for storing first and second contents therein, a processor, and a communication interface. The content providing method includes the steps of: in response to a first request from a communication terminal, the processor transmitting the first content and information for specifying the second content, to the communication terminal via the communication interface; and in response to a second request from the communication terminal, the processor transmitting the second content to the communication terminal via the communication interface.

According to yet another aspect of the present invention, a communication terminal for obtaining a content from a server is provided. The communication terminal includes: a first display; a second display; a communication interface for transmitting and receiving data to and from the server; and a processor for controlling the communication terminal. By transmitting a first request to the server via the communication interface, the processor receives a first content and information for specifying a second content. The processor displays the first content on the first display. By transmitting a second request to the server via the communication interface based on the information, the processor receives the second content. The processor displays the second content on the second display.

According to still another aspect of the present invention, a communication terminal for obtaining a content from a server is provided. The communication terminal includes: a first display; a first communication interface for communicating with a server; and a second communication interface for communicating with a second display. From the server via the first communication interface, the communication terminal receives a first content, a second content, first identification information for specifying the first content, and second identification information for specifying the second content. Based on the first identification information, the communication terminal displays the first content on the first display. Based on the second identification information, the communication terminal displays the second content on the second display via the second communication interface.

According to yet another aspect of the present invention, there is provided a content obtaining method in a communication terminal including first and second displays, a processor, and a communication interface. The content obtaining method includes the steps of: by transmitting a first request to a server via the communication interface, the processor receiving a first content and information for specifying a second content; the processor displaying the first content on the first display; by transmitting a second request to the server via the communication interface based on the information, the processor receiving the second content; and the processor displaying the second content on the second display.

As described above, the present invention provides the network system, the content providing method, the server, the communication terminal, and the content obtaining method, by which a plurality of contents are displayed respectively on the plurality of displays of the communication terminal as desired by a content provider.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is an image diagram showing a network system according to a first embodiment of the present invention.
Fig. 2 is a block diagram showing a hardware configuration of a communication terminal according to the first embodiment of the present invention.
Fig. 3 is a block diagram showing a hardware configuration of a server according to the first embodiment of the present invention.
Fig. 4 is a sequence diagram showing a communication method according to the first embodiment of the present invention.
Fig. 5 is an image diagram showing transmitted/received data in the first embodiment of the present invention.
Fig. 6 is an image diagram showing a portion of main data in the first embodiment of the present invention.
Fig. 7 is an image diagram showing a portion of variation of the main data in the first embodiment of the present invention.
Fig. 8 is an image diagram showing operation information in the first embodiment of the present invention.
Fig. 9 is an image diagram showing a specific example of the operation information in the first embodiment of the present invention.
Fig. 10 is a sequence diagram showing a communication method according to a second embodiment of the present invention.
Fig. 11 is an image diagram showing a variation of the communication terminal according to each of the first and second embodiments of the present invention.

### DESCRIPTION OF THE PREFERRED EMBODIMENTS

The following describes embodiments of the present invention with reference to figures. In the description below, the same components are given the same reference characters. Their names and functions are the same. Hence, they are not repeatedly described in detail.

### [First Embodiment]

### <Entire Configuration of Network System

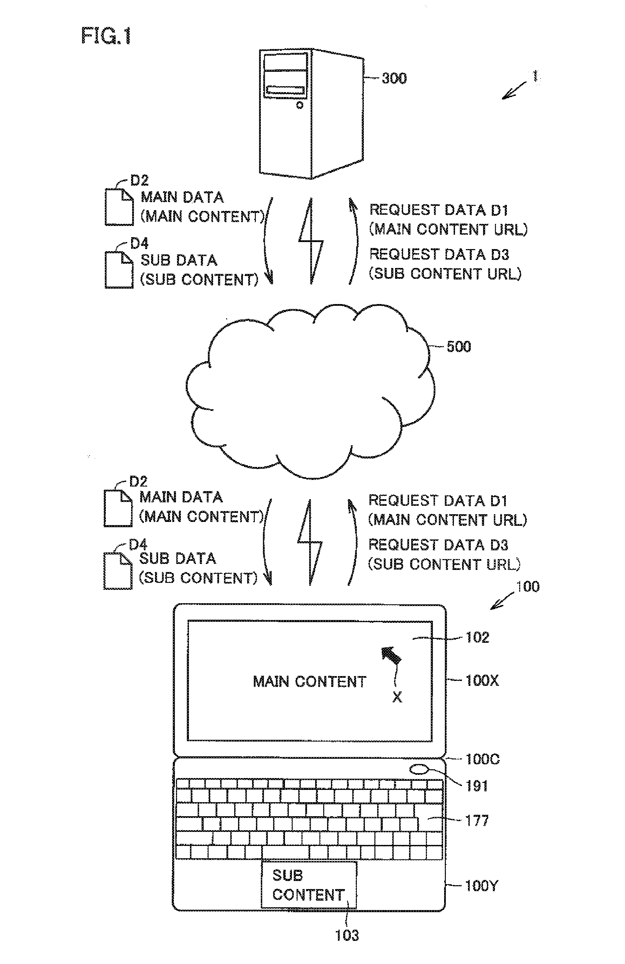

First, the entire configuration of a network system 1 according to the present embodiment will be described. Fig. 1 is an image diagram showing network system 1 according to the present embodiment.

Referring to Fig. 1, network system 1 includes a communication terminal 100 and a server 300. Communication terminal 100 and server 300 can be connected to each other via a network 500. Network 500 is constituted by dedicated lines such as a LAN (Local Area Network) and a WAN (Wide Area Network) as well as public lines such as the Internet and virtual private networks, a part of or all of which may be wireless communication lines such as a wireless LAN.

Communication terminal 100 is implemented by a notebook type personal computer, an electronic dictionary, an electronic notepad, a mobile phone, a PDA (Personal Digital Assistants), or the like. Particularly, in the present embodiment, communication terminal 100 has a plurality of displays 102, 103. Communication terminal 100 according to the present embodiment has two displays 102, 103, but may have three or more displays. Further, the plurality of displays may be provided in one device or may be connected thereto via cables or the like as described below as an applied example.

It should be noted that sub display 103 preferably has a tablet function.

Displays 102, 103 of communication terminal 100 according to the present embodiment are implemented by photosensor liquid crystal panels 140, 240 each having the tablet function.

In the present embodiment, communication terminal 100 downloads a content such as a text, an image, and/or a program from server 300 via network 500. In other words, server 300 transmits the content, which is stored therein, to communication terminal 100.

More specifically, communication terminal 100 requests server 300 for a web page (main content) via network 500. On this occasion, for example, communication terminal 100 transmits request data D1 to server 300 to request the main content based on a URL (Uniform Resource Locator) indicating the storage location of the web page. When server 300 receives request data D1, server 300 transmits main data D2 corresponding to the URL indicated in request data D1, to communication terminal 100.

Based on main data D2, communication terminal 100 displays the main content on main display 102. In the present embodiment, main data D2 includes information for obtaining a sub content, which the content provider (service provider) wishes to display on sub display 103 of communication terminal 100. Communication terminal 100 extracts the information from main data D2.

Based on the information, communication terminal 100 requests server 300 for the sub content via network 500. The information represents, for example, a URL (Uniform Resource Locator) indicating the storage location of the sub content. In order to request the sub content based on the URL of the sub content, communication terminal 100 transmits request data D3 to server 300. When server 300 receives request data D3, server 300 transmits sub data D4 corresponding to the URL indicated in request data D3, to communication terminal 100.

Based on sub data D4, communication terminal 100 displays the sub content on sub display 103. Sub data D4 in the present embodiment includes a program (operation information) for accepting an operation from a user via sub display 103. Based on sub data D4, communication terminal 100 accepts the user's instruction corresponding to a touch on sub display 103.

It should be noted that communication terminal 100 has a mode (touch mode) for accepting a button operation (touch operation) directly performed onto sub display 103, and a mode (mouse mode) for accepting a sliding operation performed onto sub display 103 as an instruction for moving a pointer X as in operating with a mouse. It is assumed that in the first and second embodiments, communication terminal 100 is brought into the touch mode based on the operation information when the operation information is received.

As such, in network system 1 according to the present embodiment, the main content that the content provider wishes to display on main display 102 of communication terminal 100 and the sub content that the content provider wishes to display on sub display 103 thereof can be arbitrarily determined (designated). For example, on sub display 103, communication terminal 100 can display a commercial of a commodity product concerned with the main content, an operation screen for operating the main content, or the like. While viewing the main content on main display 102, the user of communication terminal 100 can view a desired sub content, which is associated with the main content, on sub display 103.

The following describes a configuration for implementing such a function in detail.

### <Hardware Configuration of Communication Terminal 100>

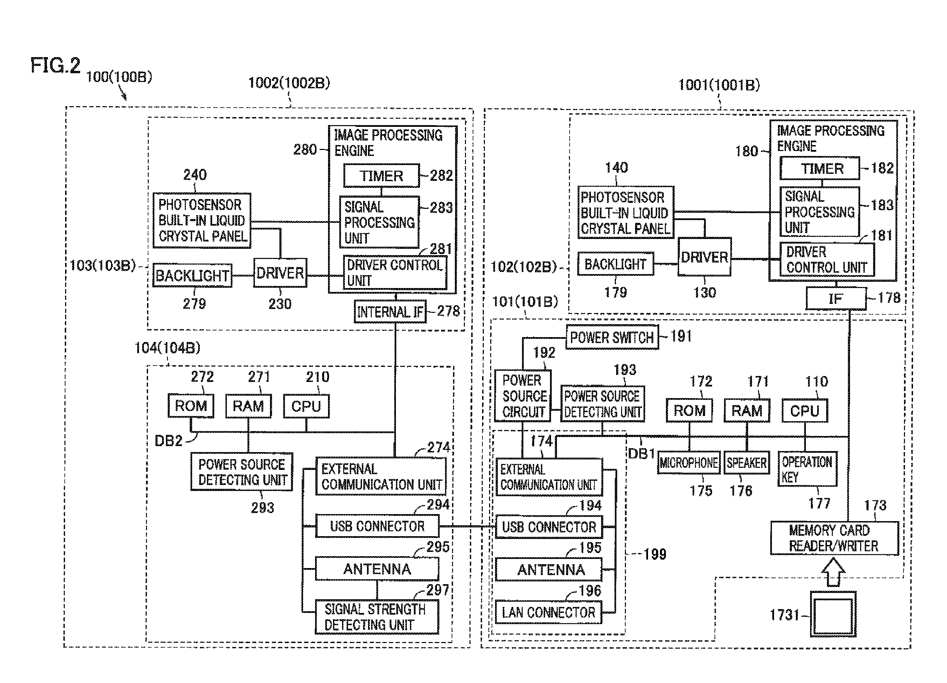

Next, one embodiment of the specific configuration of communication terminal 100 will be described. Fig. 2 is a block diagram showing a hardware configuration of communication terminal 100.

Referring to Fig. 1 and Fig. 2, communication terminal 100 includes a first unit 1001 (main device) and a second unit 1002. Second unit 1002 is connected to first unit 1001 so that it is detachable from communication terminal 100. First unit 1001 includes a principal device 101 and a main display 102. Second unit 1002 includes a sub display 103 and a principal device 104.

Main display 102 is contained in a first casing 100X. Principal device 101 is contained in a second casing 100Y. Second casing 100Y also contains second unit 1002 therein.

### (As to First Unit)

Principal device 101 includes a CPU (Central Processing Unit) 110, a RAM (Random Access Memory) 171, a ROM (Read-Only Memory) 172, a memory card reader/writer 173, an external communication unit 174, a microphone 175, a speaker 176, an operation key 177, a power switch 191, a power source circuit 192, a power source detecting unit 193, a USB (Universal Serial Bus) connector 194, an antenna 195, and a LAN (Local Area Network) connector 196. These components (110, 171-177, 193) are connected to one another via a data bus DB1. To memory card reader/writer 173, a memory card 1731 is inserted.

CPU 110 executes a program. Operation key 177 receives an instruction input from a user of communication terminal 100. RAM 171 stores therein data generated by execution of the program by CPU 110 or input data provided via operation key 177, in a volatile manner. ROM 172 stores data therein in a nonvolatile manner. ROM 172 is a ROM in and from which data can be written and deleted, such as an EPROM (Erasable Programmable Read-Only Memory) or a flash memory.

External communication unit 174 communicates with another communication terminal. Specifically, external communication unit 174 communicates with second unit 1002 via USB connector 194, for example. Further, external communication unit 174 wirelessly communicates with second unit 1002 via antenna 195, for example. Further, external communication unit 174 communicates with other communication terminals via LAN connector 196 in a wired manner.

Principal device 101 may communicate with other communication terminals through wireless communication other than Bluetooth®. For example, external communication unit 174 may wirelessly communicate with another communication terminal connected to the LAN, via a wireless LAN antenna not shown in the figure. Alternatively, external communication unit 174 may wirelessly communicate with another communication terminal via an infrared port not shown in the figure.

Power switch 191 is a switch for launching communication terminal 100. When power switch 191 is turned on, power source circuit 192 supplies power via power source detecting unit 193 to the components and main display 102, each of which is connected to data bus DB1. Further, when power switch 191 is turned on, power source circuit 192 supplies power to external communication unit 174 not via power source detecting unit 193.

Power source detecting unit 193 detects an output from power source circuit 192. Further, power source detecting unit 193 sends information concerned with the detected output (for example, a voltage value or a current value) to CPU 110.

USB connector 194 is used to connect first unit 1001 to second unit 1002. It should be noted that principal device 101 may include another USB connector in addition to USB connector 194.

First unit 1001 transmits data to second unit 1002 via USB connector 194. Further, first unit 1001 receives data from second unit 1002 via USB connector 194. Furthermore, first unit 1001 supplies power to second unit 1002 via USB connector 194.

Antenna 195 is used for communication between first unit 1001 and other communication devices (for example, second unit 1002) in compliance with the Bluetooth® standard. LAN connector 196 is used to connect communication terminal 100 to a LAN.

In the description below, external communication unit 174 and LAN connector 196 or antenna 195 are also collectively referred to as "terminal communication interface 199". Namely, terminal communication interface 199 refers to a device which allows communication terminal 100 including first unit 1001 (main device) and second unit 1002 to transmit data to an external device such as server 300 and receive data therefrom.

Main display 102 includes a driver 130, a photosensor built-in liquid crystal panel 140 (hereinafter, also referred to as "display panel 140"), an interface 178, a backlight 179, and an image processing engine 180.

Main display 102 in the present embodiment detects the user's touch operation based on sensing data provided from photosensor built-in liquid crystal panel 140. However, main display 102 may have a different type of mechanism for detecting a touch operation. Further, main display 102 may not have the tablet function.

Driver 130 is a driving circuit for driving display panel 140 and backlight 179.

Display panel 140 is a device having a function of a liquid crystal display and a function of a photosensor. In other words, display panel 140 is capable of displaying an image using liquid crystal, and sensing using a photosensor.

Interface 178 interfaces exchanges of data between principal device 101 and main display 102.

Backlight 179 is a light source provided at the back surface of display panel 140. Backlight 179 emits uniform light to the back surface.

Image processing engine 180 controls operations of display panel 140 via driver 130. This control is performed based on various data sent from principal device 101 via interface 178. The various data includes below-described commands. Further, image processing engine 180 processes data sent from display panel 140, and sends the processed data to principal device 101 via interface 178. Further, image processing engine 180 includes a driver control unit 181, a timer 182, and a signal processing unit 183.

Driver control unit 181 sends a control signal to driver 130 to control operations of driver 130. Further, driver control unit 181 analyzes a command sent from principal device 101. Further, driver control unit 181 sends to driver 130 a control signal that is based on a result of the analysis.

Timer 182 generates time information. Timer 182 sends the time information to signal processing unit 183.

Signal processing unit 183 receives data sent from the photosensor. The data thus output from the photosensor is analog data, so signal processing unit 183 first converts the analog data into digital data. Then, signal processing unit 183 subjects the digital data to data processing corresponding to a command sent from principal device 101. Then, signal processing unit 183 sends to principal device 101 data including the data (hereinafter, referred to as "response data") having been through the data processing and the time information obtained from timer 182. Further, signal processing unit 183 includes a RAM (not shown) capable of sequentially storing therein a plurality of pieces of scan data. The commands include a sensing command for instructing the photosensor to perform sensing.

It should be noted that timer 182 does not need to be necessarily provided in image processing engine 180. For example, timer 182 may be provided outside image processing engine 180 in main display 102. Alternatively, timer 182 may be provided in principal device 101. Further, microphone 175 and speaker 176 do not need to be always provided in communication terminal 100. In some embodiments of communication terminal 100, one or both of microphone 175 and speaker 176 may not be provided.

Here, main display 102 includes a system LCD. The system LCD is a device obtained by forming peripheral devices of display panel 140 in one piece on a glass substrate of display panel 140. In the present embodiment, driver 130 (excluding a circuit for driving backlight 179), interface 178, and image processing engine 180 are formed in one piece on the glass substrate of display panel 140. It should be noted that main display 102 does not need to be configured to use the system LCD, and driver 130 (excluding the circuit for driving backlight 179), interface 178, and image processing engine 180 may be provided on a substrate other than the glass substrate.

### (As to Second Unit)

Second unit 1002 is supplied with power from first unit 1001. Specifically, by connecting a below-described USB connector 294 to USB connector 194 of first unit 1001, second unit 1002 is supplied with power from power source circuit 192 of first unit 1001.

Principal device 104 includes a CPU 210, a RAM 271, a ROM 272, an external communication unit 274, a power source detecting unit 293, USB connector 294, an antenna 295, and a signal strength detecting unit 297. The components (210, 271, 272, 274, 293) are connected to one another via a data bus DB2.

CPU 210 executes a program. RAM 271 stores therein data generated by execution of the program by CPU 210, in a volatile manner. ROM 272 stores data therein in a nonvolatile manner. Further, ROM 272 is a ROM in and from which data can be written and deleted, such as an EPROM (Erasable Programmable Read-Only Memory) or a flash memory.

External communication unit 274 communicates with another communication terminal. Specifically, external communication unit 274 communicates with for example first unit 1001 via USB connector 294. Further, external communication unit 274 communicates with first unit 1001 via antenna 295, for example.

It should be noted that principal device 104 may communicate with another communication terminal (for example, first unit 1001) through wireless communication other than Bluetooth®. For example, external communication unit 274 may wirelessly communicate with another communication terminal via an infrared port not shown in the figure.

Signal strength detecting unit 297 detects the strength of a signal received via antenna 295. Further, signal strength detecting unit 297 informs external communication unit 274 of the strength thus detected.

USB connector 294 is used to connect second unit 1002 to first unit 1001.

Second unit 1002 transmits data to first unit 1001 via USB connector 294. Further, second unit 1002 receives data from first unit 1001 via USB connector 294. Furthermore, second unit 1002 is supplied with power from first unit 1001 via USB connector 294 as described above. It should be noted that second unit 1002 stores, in a battery not shown in the figure, the power thus supplied from first unit 1001.

Antenna 295 is used for communication between second unit 1002 and for example first unit 1001, in compliance with the Bluetooth® standard.

Power source detecting unit 293 detects the power supplied via USB connector 294. Further, power source detecting unit 293 sends information concerned with the detected power, to CPU 210.

Further, principal device 104 may have a function of infrared communication.

Sub display 103 includes a driver 230, a photosensor built-in liquid crystal panel 240 (hereinafter, referred to as "display panel 240"), an interface 278, a backlight 279, and an image processing engine 280. Image processing engine 280 includes a driver control unit 281, a timer 282, and a signal processing unit 283.

Sub display 103 in the present embodiment detects the user's touch operation based on sensing data provided from photosensor built-in liquid crystal panel 240. However, sub display 103 may have a different type of mechanism for detecting a touch operation. Sub display 103 may not have the tablet function.

Sub display 103 has a configuration similar to that of main display 102. Namely, driver 230, display panel 240, interface 278, backlight 279, and image processing engine 280 respectively have the same configurations as those of driver 130, display panel 140, interface 178, backlight 179, and image processing engine 180 of main display 102. Driver control unit 281, timer 282, and signal processing unit 283 respectively have the same configurations as those of driver control unit 181, timer 182, and signal processing unit 183 of main display 102. Hence, explanation is not repeated for each functional block in sub display 103.

Meanwhile, the processes in communication terminal 100 are implemented by hardware and software executed by CPUs 110, 210. Such software may be stored in ROMs 172, 272 in advance. Alternatively, the software may be stored in memory card 1731 or another storage medium and may be distributed as a program product. Alternatively, the software may be provided as a downloadable program product by an information providing business entity connected to the Internet.

Such software is read from the storage medium by memory card reader/writer 173 or another reader, or is downloaded via terminal communication interface 199, and is then temporarily stored in RAMs 171, 271 or ROMs 172, 272. The software thus temporarily stored is read from ROMs 172, 272 by CPUs 110, 210, and is then stored in RAMs 171, 271 in the form of executable programs. CPUs 110, 210 execute the programs.

By CPU 110 executing the program on RAM 171, a module called "main system 110A" is implemented. By CPU 210 executing the program on RAM 271, a module called "sub system 210A" is implemented. In other words, main system 110A described below is implemented by CPU 110 and the program executed by CPU 110. Sub system 210A described below is implemented by CPU 210 and the program executed by CPU 210.

Each component constituting communication terminal 100 shown in Fig. 2 is a general one. Hence, it can be said that an essential part of the present invention lies in the software stored in RAMs 171, 271, ROMs 172, 272, memory card 1731, and other storage media, or the software downloadable via the network. It should be noted that the operations of the hardware of communication terminal 100 are well known and are not described repeatedly in detail.

It should be also noted that the storage medium is not limited to a memory card, but may be a medium storing a program in a fixed manner such as a CD-ROM, a FD (Flexible Disk), a hard disk, a magnetic tape, a cassette tape, an optical disk (MO (Magnetic Optical Disc)/MD (Mini Disc)/DVD (Digital Versatile Disc)), an IC (Integrated Circuit) card (excluding a memory card), an optical card, and a semiconductor memory such as a mask ROM, an EPROM, an EEPROM (Electronically Erasable Programmable Read-Only Memory), or a flash ROM.

The term "program" herein includes not only a program directly executable by a CPU, but also a program in the form of a source program, a compressed program, an encrypted program, and the like.

### <Hardware Configuration of Server 300>

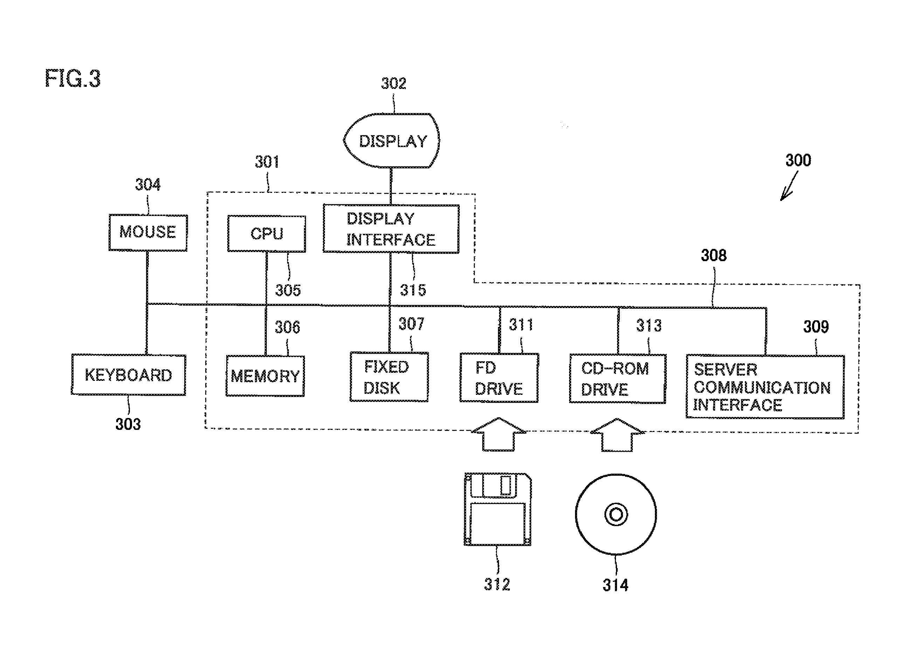

Next, referring to Fig. 3, one embodiment of a specific configuration of server 300 will be described. Fig. 3 is a block diagram showing the hardware configuration of server 300.

Server 300 in the present embodiment includes a CPU 305, a memory 306, a fixed disk 307, and a server communication interface 309, which are connected to one another via an internal bus 308.

CPU 305, which controls the hardware of server 300, is a device for performing various types of calculation. For example, CPU 305 receives request data D1, D3 from communication terminal 100 via server communication interface 309. Based on request data D1, D3, CPU 305 reads main data D2 or sub data D4 from memory 306 or fixed disk 307. CPU 305 transmits main data D2 or sub data D4 to communication terminal 100 via server communication interface 309.

Memory 306, which stores various types of information therein, temporarily stores data required for execution of a program by CPU 305, for example. Fixed disk 307 stores therein a program executed by CPU 305 or a database.

As main data D2, memory 306 and fixed disk 307 store therein a main content such as a web page, an indication of the display location of the sub content, and an indication of the storage location of the sub content (sub content URL). Main data D2 is stored in the storage location (main content URL) in memory 306 and fixed disk 307.

As sub data D4, memory 306 and fixed disk 307 store therein the sub content and the operation information. Sub data D4 is stored in the storage location (sub content URL) in memory 306 and fixed disk 307.

Server communication interface 309 converts the data output from CPU 305 into an electric signal and transmits it to outside, and receives an electric signal from outside, converts it into data, and sends it to CPU 305. Specifically, server communication interface 309 transmits the data (main data D2 or sub data D4) provided from CPU 305, to communication terminal 100 via network 500. Further, server communication interface 309 receives data (request data D1, D3) from communication terminal 100 via network 500, and sends it to CPU 305.

Alternatively, CPU 305 reads out a program, a content, or the like from a CD-ROM 314 or a flexible disk 312 using a CD-ROM (Compact Disk-Read Only Memory) drive 313 or a flexible disk (FD: Flexible Disk) drive 311. Further, CPU 305 receives an operation request provided from the user via a keyboard 303 or a mouse 304, and sends a text and/or an image, which are generated as a result of execution of a program, to display 302 via display interface 315.

### <Communication

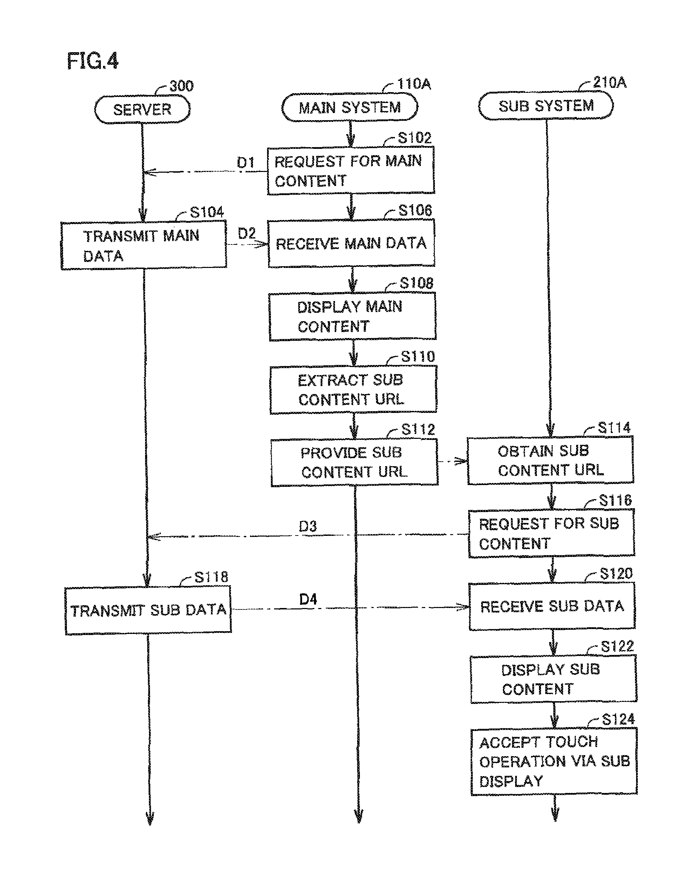

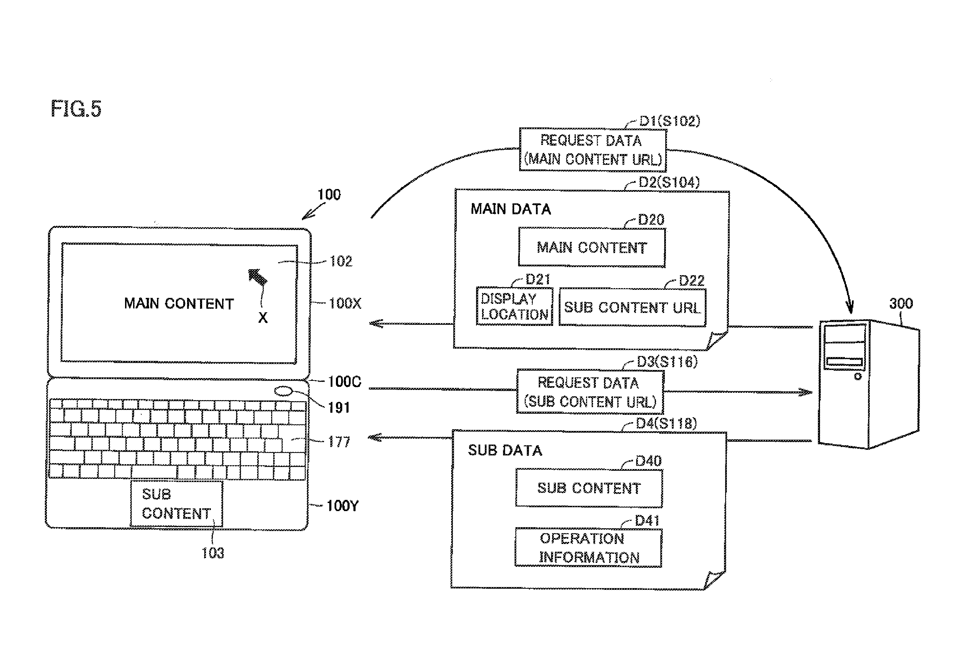

Next, a communication method according to the present embodiment will be described. Fig. 4 is a sequence diagram showing the communication method according to the present embodiment. Fig. 5 is an image diagram showing transmitted/received data in the present embodiment.

Referring to Fig. 4, via operation key 177, sub display 103 (touch panel), or the like, main system 110A first receives from the user an instruction for downloading a main content (web page). Specifically, the user inputs to communication terminal 100 the address of a web page to be viewed.

Main system 110A requests server 300 for the main content (step S102). Specifically, as shown in Fig. 5, main system 110A transmits the main content URL as request data D1 to server 300 via terminal communication interface 199.

Referring to Fig. 4 again, CPU 305 of server 300 receives request data D 1 from communication terminal 100 via server communication interface 309. In accordance with request data D1, CPU 305 reads out main data D2 stored in the location designated by the main content URL. Specifically, as shown in Fig. 5, main data D2 includes a main content D20 indicating a text and/or an image, an indication of display location D21 of the sub content, and the sub content URL (D22). CPU 305 transmits main data D2 to communication terminal 100 via server communication interface 309 (step S104).

Main data D2 includes first data type information for identifying that main data D2 includes main content D20. Alternatively, main content D20 includes first data type information for identifying that it is main content D20.

Referring to Fig. 4 again, main system 110A receives main data D2 via terminal communication interface 199 (step S106). Based on the first data type information, main system 110A displays main content D20 on main display 102 (step S108). Main system 110A extracts the sub content URL from main data D2 (step 5110).

Main system 110A provides the sub content URL to sub system 210A (step S112). Sub system 210A receives the sub content URL from main system 110A (step S114).

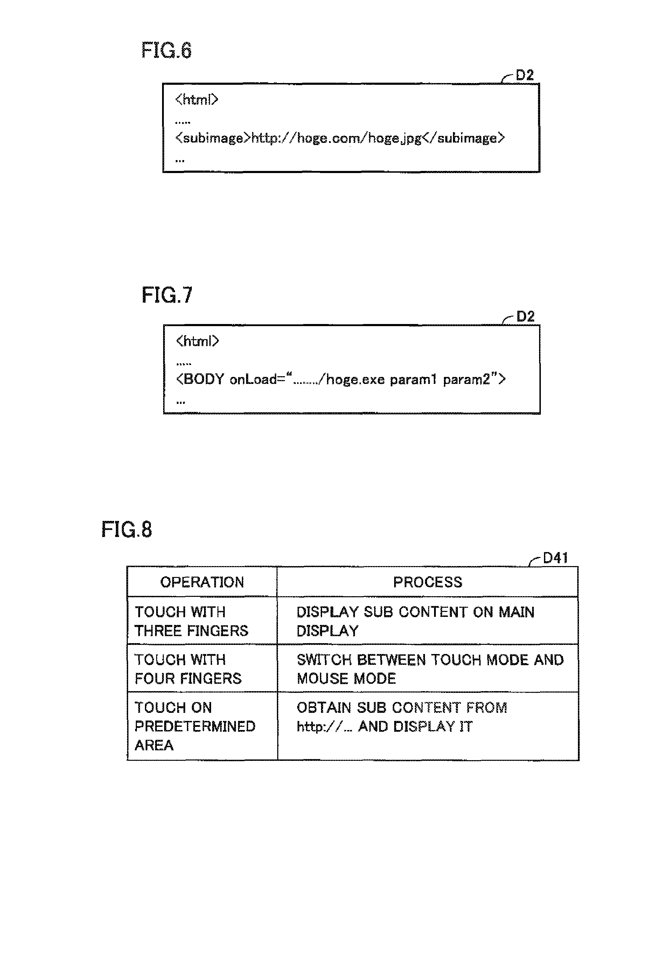

The following describes a configuration for allowing sub system 210A to obtain the sub content URL. Fig. 6 is an image diagram showing a portion of main data D2 in the present embodiment. As shown in Fig. 6, main data D2 includes a tag indicating existence of the sub content, <*subimage*>, and an indication of the storage location of the sub content, *http:*//*hoge.com*/*hoge.jpg.* Main system 110A searches for the tag of main data D2 so as to extract the sub content URL based on the tag. Main system 110A provides the extracted sub content URL to sub system 210A.

The following describes a variation for allowing sub system 210A to obtain the sub content URL. Fig. 7 is an image diagram showing a portion of a variation of main data D2 in the present embodiment. As shown in Fig. 7, main data D2 includes an instruction for launching a program for controlling sub display 103. Based on a tag of main data D2, <*BODY onLoad= "...*/*hoge.exe param1 param2"*>, main system 110A launches an application *"hoge. exe"* for sub display 103, and provides the sub content URL to this application.

In this case, a browser implementing main system 110A does not need to have a special function of controlling display processing in sub display 103. However, apart from the browser, the application *(hoge. exe* described above) is required to implement main system 110A or sub system 210A. For example, communication terminal 100 needs to store therein a control program that employs JavaScript or the like.

Referring to Fig. 4 again, sub system 210A requests server 300 for the sub content via terminal communication interface 199 based on the sub content URL (step S116). Specifically, as shown in Fig. 5, sub system 210A transmits, as request data D3, the sub content URL to server 300 via terminal communication interface 199.

Referring to Fig. 4 again, CPU 305 of server 300 receives request data D3 from communication terminal 100 via server communication interface 309. In accordance with request data D3, CPU 305 reads out sub data D4 stored in the location designated by the sub content URL. Specifically, as shown in Fig. 5, sub data D4 includes a sub content D40 indicating a text and/or an image, and operation information D41.

Sub data D4 includes second data type information for identifying that sub data D4 includes sub content D40. Alternatively, sub content D40 includes second data type information for identifying that it is sub content D40.

Fig. 8 is an image diagram showing operation information D41 in the present embodiment. As shown in Fig. 8, operation information D41 stores an indication of a touch operation onto sub display 103 and an indication of a process to be performed by main system 110A or sub system 210A, in association with each other.

Referring to Fig. 4 again, CPU 305 transmits sub data D4 to communication terminal 100 via server communication interface 309 (step S118). Sub system 210A receives sub data D4 via terminal communication interface 199 (step S120). Based on the second data type information, sub system 210A displays sub content D40 on sub display 103 (step S122). Sub system 210A accepts a touch operation performed onto sub display 103, based on operation information D41 (step S124).

Referring to Fig. 8, for example, when it is detected that sub display 103 has been touched with three fingers, sub system 210A and main system 110A cause the sub content, which is currently displayed on sub display 103, to be displayed on main display 102. When it is detected that sub display 103 has been touched with four fingers, sub system 210A switches between the touch mode and the mouse mode. In the present embodiment, when operation information D41 is received, communication terminal 100 is brought into the touch mode based on operation information D41.

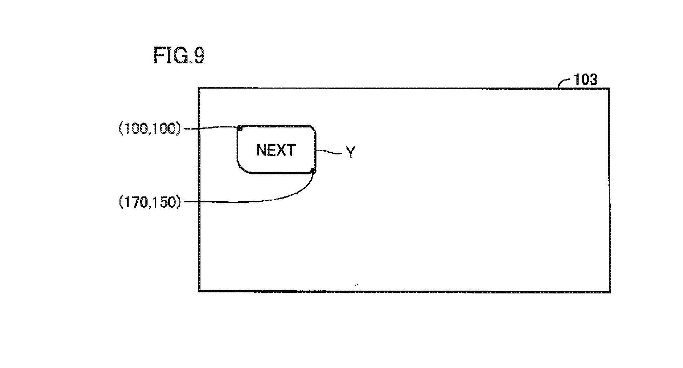

Fig. 9 is an image diagram showing a specific example of operation information D41 in the present embodiment. Referring to Fig. 8 and Fig. 9, for example, when it is detected that a touch operation has been performed onto a predetermined area (the X coordinate thereof is 100 or greater but less than 170, and the Y coordinate thereof is 100 or greater but less than 150) of sub display 103, sub system 210A determines that a button Y displayed on the predetermined area has been pushed. Sub system 210A accordingly downloads a content from a predetermined address as the sub content, for example. Sub system 210A displays the sub content on sub display 103.

Alternatively, sub system 210A provides the predetermined address to main system 110A and main system 110A downloads the content from the predetermined address as the main content. Main system 110A displays the main content on main display 102.

For example, sub system 210A displays an advertisement image on sub display 103. When the user touches the image on sub display 103, main system 110A displays on main display 102 a web page downloaded from the URL (predetermined address) linked from the image.

In addition, based on operation information D41, sub system 210A may display on sub display 103 a text and/or an image for indicating an acceptable touch operation and an executable process to the user.

### [Second Embodiment]

Next, a second embodiment of the present invention will be described. In network system 1 according to the foregoing first embodiment, sub system 210A of communication terminal 100 requests server 300 for the sub content. On the other hand, in a network system 1 according to the present embodiment, main system 110A of communication terminal 100 requests the server for the sub content.

It should be noted that the same configurations in network system 1 according to the first embodiment are not described repeatedly. More specifically, the entire configuration of network system 1, the hardware configuration of communication terminal 100, and the hardware configuration of server 300 are the same as those in the first embodiment and are therefore not described here repeatedly.

### <Communication Method>

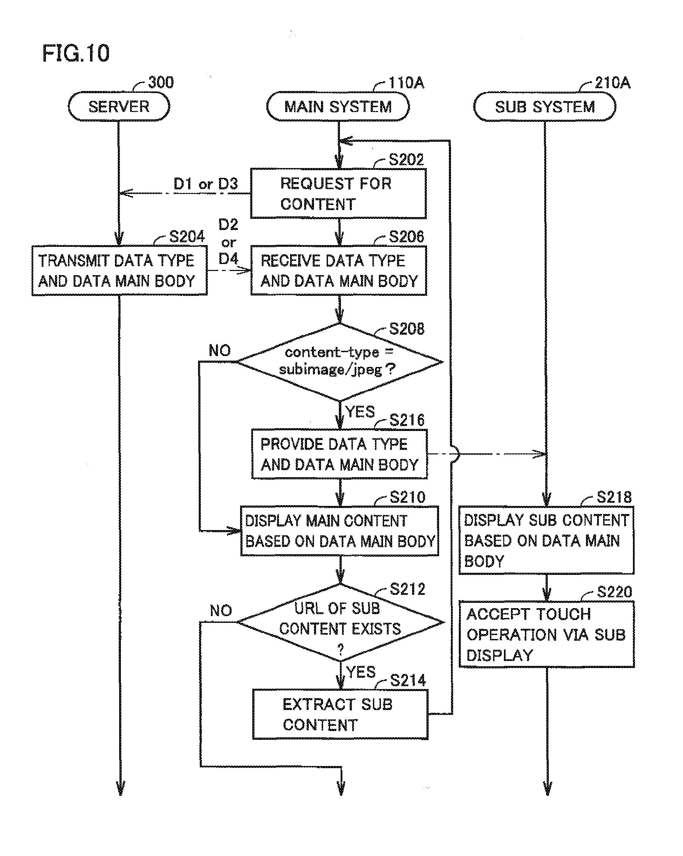

The following describes a communication method according to the present embodiment. Fig. 10 is a sequence diagram showing the communication method according to the present embodiment.

Referring to Fig. 10, main system 110A first receives an instruction from the user via operation key 177 or sub display 103 (touch panel) to download a main content (web page). Namely, the user inputs into communication terminal 100 the address of a web page that he/she wishes to view.

Main system 110A requests server 300 for the main content (step S202). Specifically, as shown in Fig. 5, main system 110A transmits the main content URL to server 300 via terminal communication interface 199, as request data D1.

Referring to Fig. 10 again, CPU 305 of server 300 receives request data D1 from communication terminal 100 via server communication interface 309. In accordance with request data D1, CPU 305 reads out main data D2 stored in the location designated by the main content URL. Specifically, as shown in Fig. 5, main data D2 includes main content D20 indicating a text and/or an image, an indication of display location D21 of the sub content, and the sub content URL (D22). CPU 305 transmits main data D2 to communication terminal 100 via server communication interface 309 (step S204).

Main data D2 in the present embodiment includes first data type information (first content type) indicating that the content is the main content. For example, main data D2 in the present embodiment includes a character string "text/html" as the content type. Alternatively, main content D20 includes first data type information for identifying that it is main content D20.

Meanwhile, sub data D4 in the present embodiment includes second data type information (second content type) indicating that the content is the sub content. For example, sub data D4 in the present embodiment includes a character string "subimage/" as the content type. Sub content D40 includes second data type information for identifying that it is sub content D40.

Referring to Fig. 10 again, main system 110A receives data (here, main data D2) via terminal communication interface 199 (step S206). Main system 110A in the present embodiment determines whether or not the data received from server 300 includes the second data type information, i.e., whether or not the content type of the data received from server 300 includes the character string "subimage/" (step S208).

When the data received from server 300 does not include the second data type information (NO in step S208), i.e., when the data from server 300 is main data D2, or when main data D2 includes the first data type information, main system 110A displays main content D20 (data main body) on main display 102 based on the first data type information (step S210). Main system 110A determines whether or not main data D2 includes the sub content URL (step S212).

When main data D2 does not include the sub content URL (NO in step S212), main system 110A waits for the user's instruction for downloading another content.

On the other hand, when main data D2 includes the sub content URL (YES in step S212), main system 110A extracts the sub content URL (step S214). Then, the process is repeated from step S202.

More specifically, main system 110A requests server 300 for the sub content (step S202). Specifically, as shown in Fig. 5, main system 110A transmits the sub content URL to server 300 via terminal communication interface 199 as request data D3.

Referring to Fig. 10 again, CPU 305 of server 300 receives request data D3 from communication terminal 100 via server communication interface 309. In accordance with request data D3, CPU 305 reads out sub data D4 stored in the location designated by the sub content URL. Specifically, as shown in Fig. 5, sub data D4 includes sub content D40 indicating a text and/or an image, and operation information D41.

It should be noted that the structure of operation information D41 is the same as that in the first embodiment and is therefore not described here repeatedly.

Referring to Fig. 10 again, CPU 305 transmits sub data D4 to communication terminal 100 via server communication interface 309 (step S204). Main system 110A receives data (sub data D4, here) via terminal communication interface 199 (step S206). Main system 110A in the present embodiment determines whether or not the data received from server 300 includes the second data type information, i.e., whether or not the content type of the data received from server 300 includes the character string "subimage/" (step S208).

When the data received from server 300 includes the second data type information (YES in step S208), i.e., when the data from server 300 is sub data D4, main system 110A provides the second data type information and sub content D40 to sub system 210A (step S216).

Sub system 210A, which has thus received sub content D40 from main system 110A, displays sub content D40 on sub display 103 (step S218). Based on operation information D41, sub system 210A accepts a touch operation performed onto sub display 103 (step S220).

### [Applied Example]

In each of the first and second embodiments, communication terminal 100 has the plurality of displays 102, 103. However, the plurality of displays may be connected thereto via cables or the like. The following describes an embodiment in which a plurality of displays are not provided in a single device.

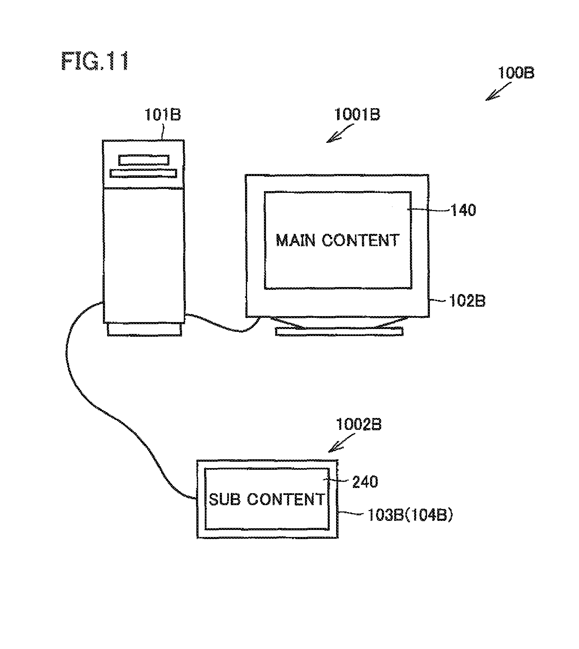

Fig. 11 is an image diagram showing a variation of communication terminal 100B. As shown in Fig. 2 and Fig. 11, communication terminal 100B includes a first unit 1001B (main device) and a second unit 1002B. Second unit 1002B is connected to first unit 1001B in a wired manner (USB connectors 194, 294) or a wireless manner (antennas 195, 295).

Further, first unit 1001B includes a principal device 101B and a main display 102B. Main display 102B is connected to principal device 101B in a wired or wireless manner. Second unit 1002B includes a sub display 103B and a principal device 104B. In this applied example, sub display 103B and principal device 104B are formed in one piece. Namely, communication terminal 100B in the applied example does not have first casing 100X and second casing 100Y shown in Fig. 1.

The hardware constituting principal device 101B, main display 102B, and second unit 1002B is the same as those in the first and second embodiments, and is therefore not described here repeatedly.

As such, the configurations according to the first and second embodiments can be applied to desktop type computers and the like. For example, when the user operates using a mouse via the USB connector or antenna 195 of principal device 101B, sub display 103 may merely display an advertisement concerned with the web page. In other words, when the user views the web page using the mouse, sub display 103B may not accept the user's operation.

### <Other Embodiment>

As apparent from the description for the first and second embodiments, an object of the present invention is to allow server 300 to determine the main content to be displayed on main display 102 of communication terminal 100 and the sub content to be displayed on sub display 103. Namely, the object of the present invention is to respectively display contents on the plurality of displays of communication terminal 100 as desired by the content provider. In other words, network system 1 according to the present embodiment can implement user interfaces on the plurality of displays as desired by the content provider.

As apparent from these, the foregoing first and second embodiments are not to limit which step is performed by system 110A or 210A, and which step is performed by CPU 110 or 210. Further, communication terminal 100 may be provided with one CPU which serves to fulfill the roles of CPUs 110, 210.

Further, the present invention can be accomplished by supplying a program to network system 1, communication terminal 100, or server 300. An effect of the present invention can be obtained also when a computer (or a CPU or an MPU) of a system or a device is supplied with a storage medium having a program stored thereon and represented by software for accomplishing the present invention, and reads and executes a program code stored in the storage medium.

In this case, the program code thus read out from the storage medium itself implements the functions of the foregoing embodiments, and the storage medium having the program code stored thereon constitutes the present invention.

Examples of the storage medium for supplying the program code include: memory card 1731, CD-ROM 314, a hard disk, an optical disk, a magneto-optical disc, a CD-R, a magnetic tape, a nonvolatile memory card (IC memory card), a ROM (mask ROM, flash EEPROM, etc.,), and the like.

Further, the present invention includes not only a case where the functions of the foregoing embodiments are implemented by executing the program code read out by the computer, but also a case where a part of or all of the actual process is performed based on an instruction of the program code by an OS (operating system) running on the computer, so as to implement the functions of the foregoing embodiments.

Further, the present invention also includes a case where the program code read out from the storage medium is written in a memory provided in an extension board inserted in the computer or an extension unit connected to the computer, and then a CPU or the like provided in the extension board or the extension unit performs a part of or all of the actual process based on an instruction of the program code, so as to implement the functions of the foregoing embodiments.

Although the present invention has been described and illustrated in detail, it is clearly understood that the same is by way of illustration and example only and is not to be taken by way of limitation, the scope of the present invention being interpreted by the terms of the appended claims.

## Claims

1. A network system comprising a server (300) and a communication terminal (100),
said server including
a memory (306) for storing first and second contents therein,
a server communication interface (309) for transmitting and receiving data to and from said communication terminal, and
a server processor (305) for controlling said server,
in response to a first request (D1) from said communication terminal, said server processor transmitting said first content (D20) and information (D22) for specifying said second content (D40), to said communication terminal via said server communication interface,
in response to a second request (D3) from said communication terminal, said server processor transmitting said second content to said communication terminal via said server communication interface,
said communication terminal including
a first display (102),
a second display (103),
a terminal communication interface (195) for transmitting and receiving said data to and from said server, and
a terminal processor (110) for controlling said communication terminal,
by transmitting said first request to said server via said terminal communication interface, said terminal processor receiving said first content and the information for specifying said second content,
said terminal processor displaying said first content on said first display,
by transmitting said second request to said server via said terminal communication interface based on said information, said terminal processor receiving said second content,
said terminal processor displaying said second content on said second display.

2. The network system according to claim 1, wherein:
said terminal processor includes
a first module for receiving said first content by transmitting said first request to said server via said terminal communication interface, and displaying said first content on said first display, and
a second module for receiving said second content by transmitting said second request to said server via said terminal communication interface based on said information, and displaying said second content on said second display.

3. The network system according to claim 1, wherein:
said first content includes first identification information,
said second content includes second identification information, and
said terminal processor determines whether or not each of the contents from said server includes said second identification information, so as to display the content including said second identification information, as said second content on said second display.

4. The network system according to claim 1, wherein:
said memory stores a plurality of the second contents therein, and stores therein operation information indicating correlations between operations and processes in association with said plurality of second contents,
said server processor transmits a second content of said plurality of second contents and operation information corresponding to the second content, to said communication terminal,
said second display is a touch panel, and
said terminal processor accepts an operation via said touch panel, and performs a process corresponding to the operation with reference to said operation information.

5. The network system according to claim 4, wherein:
said first display displays a pointer,
said touch panel displays a button,
said communication terminal has a mouse mode for accepting an instruction for moving said pointer using said touch panel, and a touch mode for accepting an instruction for pushing said button on said touch panel, and
said operation information includes a correlation between a predetermined operation onto said touch panel and a process of switching between the modes.

6. A content providing method in a network system including a server for storing first and second contents therein and a communication terminal including first and second displays, the content providing method comprising the steps of:
said communication terminal transmitting a first request to said server;
in response to said first request, said server transmitting said first content and information for specifying said second content, to said communication terminal;
said communication terminal displaying said first content on said first display;
said communication terminal transmitting a second request to said server based on said information;
in response to said second request, said server transmitting the second content to said communication terminal; and
said communication terminal displaying said second content on said second display.

7. A server for providing a content to a communication terminal, the server comprising:
a memory for storing first and second contents therein;
a communication interface for transmitting and receiving data to and from said communication terminal; and
a processor for controlling said server,
in response to a first request from said communication terminal, said processor transmitting said first content and information for specifying said second content to said communication terminal via said communication interface,
in response to a second request from said communication terminal, said processor transmits said second content to said communication terminal via said communication interface.

8. A content providing method in a server including a memory for storing first and second contents therein, a processor, and a communication interface, the content providing method comprising the steps of:
in response to a first request from a communication terminal, said processor transmitting said first content and information for specifying said second content, to said communication terminal via said communication interface; and
in response to a second request from said communication terminal, said processor transmitting said second content to said communication terminal via said communication interface.

9. A communication terminal for obtaining a content from a server, the communication terminal comprising:
a first display;
a second display;
a communication interface for transmitting and receiving data to and from said server; and
a processor for controlling said communication terminal,
by transmitting a first request to said server via said communication interface, said processor receiving a first content and information for specifying a second content,
said processor displaying said first content on said first display,
by transmitting a second request to said server via said communication interface based on said information, said processor receiving said second content,
said processor displaying said second content on said second display.

10. A communication terminal for obtaining a content from a server, the communication terminal comprising:
a first display;
a first communication interface for communicating with a server; and
a second communication interface for communicating with a second display,
from said server via said first communication interface, the communication terminal receiving a first content, a second content, first identification information for specifying said first content, and second identification information for specifying said second content,
based on said first identification information, the communication terminal displaying said first content on said first display, and
based on said second identification information, the communication terminal displaying said second content on said second display via said second communication interface.

11. A content obtaining method in a communication terminal including first and second displays, a processor, and a communication interface, the content obtaining method comprising the steps of:
by transmitting a first request to a server via said communication interface, said processor receiving a first content and information for specifying a second content;
said processor displaying said first content on said first display;
by transmitting a second request to said server via said communication interface based on said information, said processor receiving said second content; and
said processor displaying said second content on said second display.
